Europäisches Patentamt

(19) European Patent Office

Office européen des brevets

(11) Publication number: 0 147 917
A1

# (12) EUROPEAN PATENT APPLICATION

(21) Application number: 84305815.7

(22) Date of filing: 24.08.84

(51) Int. Cl.⁴: G 01 M 3/20
G 01 M 3/04

(30) Priority: 07.09.83 GB 8323998

(43) Date of publication of application:
10.07.85 Bulletin 85/28

(84) Designated Contracting States:
AT BE DE FR GB IT NL SE

(71) Applicant: BL TECHNOLOGY LIMITED
35-38 Portman Square
London W1H OHQ(GB)

(72) Inventor: Bray, David James
6 Orchard Road
Bromsgrove Worcestershire(GB)

(72) Inventor: Johnson, Peter Ernest
160 Birmingham Road
Redditch Worcestershire(GB)

(72) Inventor: Marshall, Peter Edward George
37 Saxon Close
Stratford-on-Avon Warwickshire(GB)

(72) Inventor: Piper, Fancis Raymond
5 Cedarwood Gardens
Evesham Worcestershire(GB)

(74) Representative: Waters, Jeffrey
ARG Patent Department Cowley Body Plant
Cowley Oxford OX4 5NL(GB)

(54) Detecting leaks.

(57) A leak detector comprises a detector head which is to be scanned across a surface to detect a signal gas eminating from the surface. The opposite side of the surface from the head is supplied with a signal gas under pressure so that signal gas passes through leaks in the surface. Detection of signal gas by the head should then constitute detection of a leak. A curtain 1 of barrier gas is provided around a simple inlet 2 to protect the inlet from spurious signal gas. Orifices 32 provide jets which protect the curtain when the detector is subject to draughts or is scanned across a surface.

SIGNAL GAS DETECTION SYSTEM

- 1 -   **0147917**

DETECTING LEAKS

The invention relates to detecting leaks and particularly to a method of and apparatus for detection of a signal gas passing through a surface. The surface may be a motor vehicle body internally pressurised above ambient by a signal gas constituted by a mixture of helium and air. The leak detection may be concentrated on or confined to door and window seals and joints between sheets of material which make up the body.

It is essential for the detector to respond to a signal eminating directly from a leak but for it not to respond to spurious concentrations of signal gas which may be present in the atmosphere or may have originated from leaks in parts of the body which are not at the instant concerned being scanned. The position of a detector head when signal gas is detected is then a representation of the position of the leak.

It has already been proposed, for example in our co-pending UK Patent Application No. 83 01407 (Publication No. 2133892), to provide an annular opening surrounding a gas sample inlet and to direct a barrier gas through the opening to provide a gas curtain around the inlet to protect the inlet from signal gas other than that originating directly from a leak in the surface. Air is a convenient barrier gas. Throughout this

Specification and in the claims the term barrier gas is used generally to refer to a gas which behaves neutrally in relation to the signal gas and does not interfere with the detection of signal gas.  When the barrier gas is air and the signal gas is an air-helium mixture, the detector is set so that it does not respond to the level of helium normally present in air.

According to one aspect of the present invention there is provided a leak detector comprising a detector head for scanning a surface for detection of escape of signal gas through the surface, the head comprising a sample inlet, an annular opening surrounding the inlet, means for directing a barrier gas through the annular opening to provide a gas curtain around the inlet, a plurality of orifices spaced out around the annular opening to the exterior thereof and means for directing barrier gas through the orifices.

Preferably the orifices are angled outwardly.  Preferably the velocity of gas in the jets is greater than the velocity of gas in the curtain.

The orifices may be provided in the wall of an annular chamber surrounding the inlet.

According to a second aspect of the invention there is provided a method of detecting leaks though a surface including the steps of pressurising one side of the surface with a signal gas so that the signal gas passes through leaks in the surface, scanning the other side of the surface with a signal gas detection head incorporating a sampler inlet, surrounding the inlet with a barrier gas curtain flowing towards the surface and protecting the curtain by means of a plurality of gas jets surrounding the curtain and directed at the surface.

Preferably the jets are angled outwardly. Preferably the velocity of gas from the jets is greater than the velocity of gas in the curtain. The average air velocity in the jets may be between one and ten times that of the barrier.

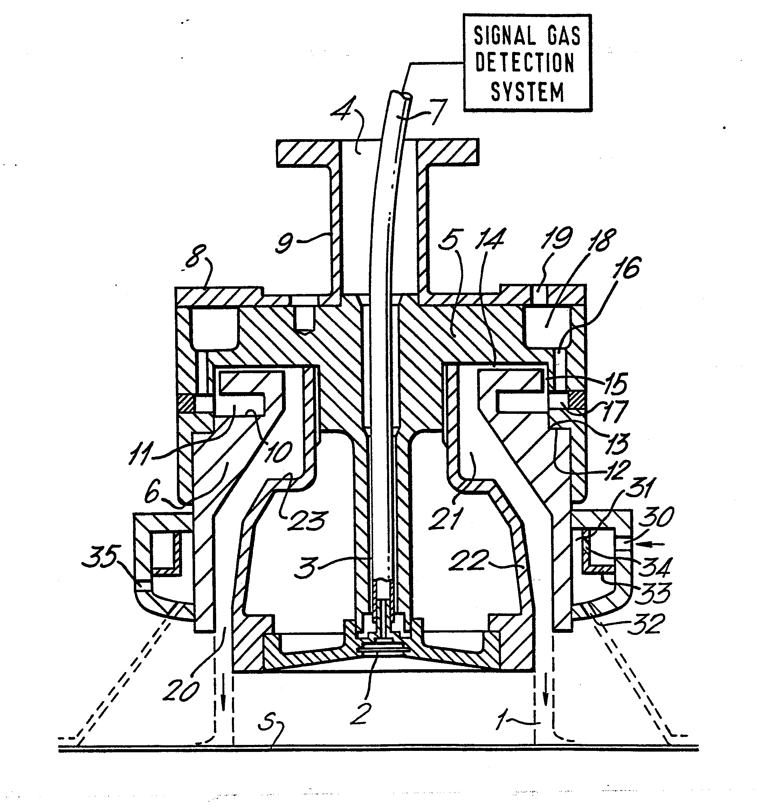

An embodiment of the invention will now be desribed by way of example with reference to the accompanying drawing which is a diagrammatic cross-section through a detector head of a leak detector according to the invention.

A curtain of barrier gas 1 surrounds a gas sample inlet 2 in the end of a detector head, connected by a flexible hose 7, running through passages 3 and 4, to a detection system for the signal gas. The head is arranged to scan a surface S for the presence of leaks. The under-side (as shown) of the surface S is pressurised with a signal gas so that signal gas passes through leaks in the surface. The barrier gas is air and the Signal gas is air to which a small amount of helium has been added, and a mass spectrometer is used in the detection system for detecting the helium. Other signal gasses and barrier gasses can of course be used.

The leak detector shown in the drawing comprises a body 5 to which a sleeve 6 is secured. The top of the body 5 is closed by means of an end plate 8 which is integral with a tube 9 which defines the passage 4.

The sleeve 6 has a square sectioned groove 10 cut out from it, which extends all the way around the circumference of the sleeve, and defines a first annular chamber 11.

The distance between the top of the sleeve 6 and the adjacent surface of the body 5 is carefully controlled by means of abutting surfaces 12 on the sleeve and 13 on the body in order to define a circumferential orifice 14 which communicates via annular passage 15 with the first annular chamber 11.

Barrier gas is fed into the first annular chamber 11 by means of right angled drillings 16, 17 in the body, four of which are evenly spaced around the circumference of the body and communicate with a square sectioned groove which defines a second annular chamber 18 in the top face of the body. Inlet 19 connects to a source of compressed gas.

- 5 -

0147917

The purpose of the orifice 14 and of the tortuous path which the barrier gas must take before it reaches the orifice 14 is to ensure that barrier gas emerging from the orifice 14 enters an annular duct 21 with an equal mass flow rate around the entire circumference of the annular duct 21.

It will be noted that in order to pass from the second annular chamber 18 to the annular orifice 14 the barrier gas has to pass through drilling 16, turn a right angle into drilling 17, a further right angle into passage 15 and a further right angle into orifice 14. Finally, the gas stream emerging from orifice 14 projects directly onto a cylindrical wall normal to the gas flow.

The second annular chamber 18 acts like a manifold to distribute pressure equally amongst the drillings 16 so that barrier gas is fed at equal pressure along all points to the inlet ports of first annular chamber 11. Chamber 11 acts as a reservoir and helps to distribute air evenly around the inlet passage 15 to orifice 14.

After passing through the orifice 14, the barrier gas passes down the annular duct 21 the outer wall of which is defined by the sleeve 6 and the inner wall of which is defined by means of a hollow insert 22. The duct 21 is symmetrical about the axis of the detector, that is, the shape of the duct can be generated by any axial section of the duct when swept in a circle about the axis of the detector. The outer surface of the duct 21 has a frustro-conical portion with a semi-angle of approximately $30^o$ and the inner surface of the duct over this region has a shoulder 23. Lower down the outer surface of the duct 21 is cylindrical and over this region the inner surface is frustro-concial with a semi-angle of around $5^o$ to $10^o$. The surfaces of the duct cover are smooth.

The configuration of the duct 21 is such as to produce substantially laminar flow from a circular opening 20 even though the flow immediately after the orifice 14 is turbulent. Laminar flow means that at any point around the circumference of opening 21, the velocity profile across the width of the curtain is always positive and reduces gradually from the centre of the curtain to the sides.

Because equal mass flow rate enters the duct around its circumference, the velocity profile is also substantially the same around the entire circumference of the curtain. Consequently the curtain has no weak points or local disturbances in it and is of equal strength around its circumference.

It has been found that the shoulder 23, which forms a region of locally increased diameter of the duct 21, is important in producing the desired laminar flow.

The tapering of the duct 21 has the effect of allowing a shorter duct to be used than would otherwise be needed to generate laminar flow.

Typical dimensions are as follows: diameter of curtain, 100 millimetres; axial length of the duct 21, 100 millimetres: Width of orifice 14, between 0.25 and 1.25 millimetres; width of curtain, between 2 and 4 millimetres. The operating height of the detector from surface S is 2 to 25 millimetres.

The compressed air supply may be in the region of 0.3 to 1.3 bar. Lower pressures could be used if the air is conducted along larger diameter tubes. The gas inlet 2 and flexible hose assembly is evacuated by an auxiliary pump (not shown), which ensures rapid transfer of the signal gas when present into the analyser for detection by the mass spectrometer. The system detects helium quantities in the range $10^{-7}$ to $10^{-8}$ millibar litres per second. It is possible that results could be achieved without the auxiliary pump because the pressure within the curtain 1 is slightly in excess of atmospheric due to the effect of the barrier gas defining a closed volume with the surface S to be tested but the response would be considerably slower.

As thus far described, the detector corresponds to that described in our aforesaid pending UK Patent Application No. 83 01407 (Publication No. 2133892).

In accordance with the present invention, the lower part of sleeve 6 carries around its outer circumference an annular chamber 31 which is provided around its circumference with a series of orifices 32 such that these orifices surround the curtain of barrier gas and are directed towards the surface to be scanned. Baffle 33 with spaced apertures 34 provides even distribution of gas from inlet 30 around the chamber 31. Pressure tapping 35 enables the pressure in chamber 31 to be measured. Orifices 32 are inclined outwardly. In automotive applications a 45° inclination is convenient. The apertures 34 supply air or other barrier gas under pressure to the chamber 31 so that the orifices 32 provide outwardly directed jets surrounding the curtain of barrier gas. These jets impinge on the surface S and are then directed outwardly along the surface. The air velocity in the jets is greater than the corresponding air velocity in the curtain by a factor of up to 10:1. The jets serve to shield the curtain against the disruptive effect of draughts or of moving the detector in a scanning motion across the surface. These jets guard the curtain against instability which might otherwise be caused through relative air currents by inducing turbulence and thereby dissipating the current.

The provision of jets from orifices 32 enables a stable curtain 1 to be maintained with a reduced velocity in the curtain. This reduced velocity in turn results in a lower rate of exchange of gas between the curtain itself and the space bounded by the curtain and thus allows higher concentrations of signal gas to be maintained. In this way very small leaks can be detected more reliably.

In a typical example for automotive applications, with an orifice inclination of $45^{\circ}$, it is convenient to use 2 millimetre diameter orifices with a length of 4 millimetres at a pitch of 5 millimetres. A supply pressure in the range 1 to 12 millimetres of water is suitable. More generally, the orifice diameter may lie between 1 and 5 millimetres with a length at least equal to the diameter and with a pitch between orifices of from 2 to 5 or even 10 diameters. The orifice inclination to the axis of the head may be from $15^{\circ}$ to $60^{\circ}$. The orifices may be arranged in two or more rows or in any other pattern which provides an effectively continuous shield. Dimensions and pressures should be selected to result in an air velocity in the jets greater than that in the curtain, preferably between one and ten times that in the curtain.

Although it is preferable that the orifices 32 should be angled outwardly so that the jets are deflected away from the curtain when they meet the surface, it may be possible for at least some of the jets to be parallel to the curtain so long as they are sufficiently spaced from the curtain to avoid breaking up the curtain as they reach the surface.

The detector may be used for detecting leaks from a vehicle such as where seals have been incorrectly applied or where seams have been badly welded or sealed and is very suitable for this purpose because of the stability of the curtain. It will be apparent that, in scanning for example the door seal on a vehicle the surface in the region of the door seal is not flat, and a stable curtain is a practical necessity for the device to work at all. It has been found that the illustrated detector head need not be used with its axis at right angles to the body to be tested, but can be used at any inclination at which the curtain is stable when the dectector is moved. The curtain even remains effective if the body has a local depression, eg a blind gutter on a vehicle, beneath the curtain. The leak detector may be mounted as the head on a robot arm programmed to track around certain paths around the vehicle along which leaks may be detected. The provision of jets from orifices 32 increases the stability of the curtain and allows scanning to
be carried out more quickly and accurately.

## CLAIMS

1       A leak detector comprising a detector head for scanning
        a surface for detection of escape of signal gas through
        the surface, the head comprising a sample inlet, an
        annular opening surrounding the inlet, means for
        directing a barrier gas through the annular opening to
        provide a gas curtain around the inlet, a plurality of
        orifices spaced out around the annular opening to the
        exterior thereof and means for directing barrier gas
        through the orifices for providing gas jets around the
        curtain.

2       A leak detector as claimed in claim 1 wherein the
        orifices are angled outwardly.

3       A leak detector as claimed in claim 2 wherein the
        inclination of the orifices is between $15^{\circ}$ and $60^{\circ}$
        to the axis of the head.

4       A leak detector as claimed in any one of the preceding
        claims wherein the velocity of the gas jets is greater
        than the velocity of gas in the curtain.

5       A leak detector as claimed in any of the the preceding claims wherein the diameter of each orifice is between 1 and 5 millimetres.

6    A leak detector as claimed in any one of the preceding claims wherein the length of each orifice is at least as great as the diameter thereof.

7    A leak detector as claimed in any of the preceding claims wherein the spacing between the centres of adjacent orifices is between 2 and 10 orifice diameters.

8    A leak detector as claimed in any one of the preceding claims wherein the orifices are provided in the wall of an annular chamber surrounding the inlet.

9    A method of detecting leaks through a surface including the steps of pressurising one side of the surface with a signal gas so that the signal gas passes through leaks in the surface, scanning the other side of the surface with a signal gas detection head incorporating a sample inlet, surrounding the inlet with a barrier gas curtain flowing towards the surface and protecting the curtain by means of a plurality of gas jets surrounding the curtain and directed at the surface.

10  A method as claimed in claim 9 wherein the jets are angled outwardly.

11  A method as claimed in claim 10 wherein the average air velocity in the jets is between one and ten times that in the curtain.

**0147917**

European Patent
Office

**EUROPEAN SEARCH REPORT**

. Application number

EP 84 30 5815

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 064 880 (BL TECHNOLOGY LTD.) --- | 1 | G 01 M 3/20<br>G 01 M 3/04 |
| D,P<br>A | GB-A-2 133 892 (BL TECHNOLOGY LTD.) ----- | | |

TECHNICAL FIELDS
SEARCHED (Int. Cl.4)

G 01 M 3/04
G 01 M 3/20

The present search report has been drawn up for all claims

| Place of search BERLIN | Date of completion of the search 28-12-1984 | Examiner KOEHN G |
|---|---|---|

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503. 03.82